# EUROPÄISCHE PATENTANMELDUNG

(11) **EP 4 439 946 A1**
(43) Veröffentlichungstag der Anmeldung: **02.10.2024**
(21) Anmeldenummer: 24164686.8
(22) Anmeldetag: 19.03.2024
(51) Int. Cl.: H02M 1/00, H02M 3/07, G05F 1/56

(54) **DC/DC WANDLER MIT KASKADE AUS KONFIGURIERBARER LADUNGSPUMPE UND AUSGANGSLÄNGSREGLER FÜR HÖRGERÄTE**

(30) Priorität: 31.03.2023 DE 102023203022
(71) Anmelder: Sivantos Pte. Ltd., Singapore 539775 (SG)
(72) Erfinder: MAI, Timo, 91058 Erlangen (DE); DICKEL, Thomas, 91058 Erlangen (DE)
(74) Vertreter: FDST Patentanwälte

(57) **Zusammenfassung**

Es wird eine Spannungsversorgung (14) für ein bestimmungsgemäß am Körper eines Nutzers getragenes elektronisches Gerät, insbesondere ein Hörinstrument (2), angegeben. Die Spannungsversorgung (14) umfasst eine Ladungspumpe (20) zur Wandlung einer Batteriespannung (U_{B}) um einen Wandlungsfaktor zu einer Zwischenspannung (Uz), wobei die Ladungspumpe (20) zwischen mindestens zwei Stufen des Wandlungsfaktors umschaltbar ist. Die Spannungsversorgung (14) umfasst weiterhin einen Spannungsregler (26) zur Reduzierung der Zwischenspannung (Uz) auf eine Ausgangsspannung (U_{A}) eines vorgegebenen Sollwerts (U_{R}) sowie eine Steuerung (24) zur reversiblen Umschaltung der Ladungspumpe (20) zwischen den Stufen des Wandlungsfaktors. Die Steuerung (24) ist dabei dazu eingerichtet, die Ladungspumpe (20) nach Maßgabe einer Stellgröße (E) des Spannungsreglers (26) anzusteuern.

## Beschreibung

Die Erfindung bezieht sich auf eine Spannungsversorgung für ein bestimmungsgemäß am Körper getragenes elektronisches Gerät, insbesondere ein Hörinstrument. Die Erfindung bezieht sich weiterhin auf ein solches elektronisches Gerät.

Als Hörinstrument wird allgemein ein elektronisches Gerät bezeichnet, dass das Hörvermögen einer das Hörinstrument tragenden Person (die nachfolgend als "Träger" oder "Nutzer" bezeichnet ist) unterstützt. Insbesondere bezieht sich die Erfindung auf Hörinstrumente, die dazu eingerichtet sind, einen Hörverlust eines hörgeschädigten Nutzers ganz oder teilweise zu kompensieren. Ein solches Hörinstrument wird auch als "Hörgerät" bezeichnet. Daneben gibt es Hörinstrumente, die das Hörvermögen von normalhörenden Nutzern schützen oder verbessern, zum Beispiel in komplexen Hörsituationen ein verbessertes Sprachverständnis ermöglichen. Zu den Hörinstrumenten zählen ferner auch (im oder an dem Ohr getragene) drahtlose Kopfhörer, insbesondere sogenannte Ear Plugs und Headsets.

Hörinstrumente im Allgemeinen, und Hörgeräte im Speziellen, sind meist dazu ausgebildet, am Kopf und hier insbesondere ihn oder an einem Ohr des Nutzers getragen zu werden, insbesondere als Hinter-dem-Ohr-Geräte (nach dem englischen Begriff "behind the ear" auch als BTE-Geräte bezeichnet) oder In-dem-Ohr-Geräte (nach dem englischen Begriff "in the ear" auch als ITE-Geräte bezeichnet). Im Hinblick auf ihre interne Struktur weisen Hörinstrumente regelmäßig mindestens einen (akusto-elektrischen) Eingangswandler, eine Signalverarbeitungseinheit (Signalprozessor) und einen Ausgangswandler auf. Im Betrieb des Hörinstruments nimmt der oder jeder Eingangswandler einen Luftschall aus der Umgebung des Hörinstruments auf und wandelt diesen Luftschall in ein Eingangs-Audiosignal (d. h. ein elektrisches Signal, das eine Information über den Umgebungsschall transportiert) um. In der Signalverarbeitungseinheit wird das oder jedes Eingangs-Audiosignal verarbeitet (d. h. hinsichtlich seiner Schallinformation modifiziert), um das Hörvermögen des Nutzers zu unterstützen, insbesondere um einen Hörverlust des Nutzers auszugleichen. Die Signalverarbeitungseinheit gibt ein entsprechend verarbeitetes Audiosignal an den Ausgangswandler aus.

In den meisten Fällen ist der Ausgangswandler als elektro-akustischer Wandler ausgebildet, der das (elektrische) Ausgangs-Audiosignal wieder in einen Luftschall umwandelt, wobei dieser - gegenüber dem Umgebungsschall modifizierte - Luftschall in den Gehörgang des Nutzers abgegeben wird. Bei einem hinter dem Ohr getragenen Hörinstrument ist der auch als "Hörer" ("Receiver") bezeichnete Ausgangswandler meist außerhalb des Ohrs in einem Gehäuse des Hörinstruments integriert. Der von dem Ausgangswandler ausgegebene Schall wird in diesem Fall mittels eines Schallschlauchs in den Gehörgang des Nutzers geleitet. Alternativ hierzu kann der Ausgangswandler auch in dem Gehörgang, und somit außerhalb des hinter dem Ohr getragenen Gehäuses, angeordnet sein. Solche Hörinstrumente werden (nach dem englischen Begriff "receiver in canal") auch als RIC-Geräte bezeichnet. Im Ohr getragene Hörinstrumente, die so klein dimensioniert sind, dass sie nach außen über den Gehörgang nicht hinausstehen, werden (nach dem englischen Begriff "completely in canal") auch als CIC-Geräte bezeichnet.

In weiteren Bauformen kann der Ausgangswandler auch als elektro-mechanischer Wandler ausgebildet sein, der das Ausgangs-Audiosignal in Körperschall (Vibrationen) umwandelt, wobei dieser Körperschall zum Beispiel in den Schädelknochen des Nutzers abgegeben wird. Ferner gibt es implantierbare Hörinstrumente, insbesondere Cochlear-Implantate, und Hörinstrumente, deren Ausgangswandler den Hörnerv des Nutzers direkt stimulieren.

Zu den bestimmungsgemäß am Körper getragenen elektronischen Geräten (sogenannten "Wearables") gehören neben den Hörinstrumenten auch Armbanduhren, Smart-Brillen, medizinische Geräte wie z.B. Herzschrittmacher oder Insulinpumpen, medizinische Überwachungsgeräte wie z.B. EEG-Logger, etc.

Solche Wearables haben - in stärkerer oder schwächerer Ausprägung - in der Regel die gemeinsame Eigenschaften, dass sie einerseits durch eine Batterie betrieben werden. Damit verbunden ist das typische Problem, dass die von der Batterie zur Verfügung gestellte Batteriespannung zeitlich mit dem Ladestatus der Batterie variiert, während von der Elektronik des Wearable aber oft eine konstante Betriebsspannung gefordert wird. Der Batterie und der Elektronik eines Wearable muss daher in der Regel eine Spannungsversorgungsschaltung (kurz: Spannungsversorgung) zwischengeschaltet werden, die die Batteriespannung in die konstante Ausgangsspannung des benötigten Betriebsspannungswerts umwandelt.

Andererseits sollen Wearables aber regelmäßig möglichst leicht und kompakt aufgebaut sein, um den Nutzer im Gebrauch möglichst wenig einzuschränken. Die kompakte Größe beschränkt dabei in besonderes starkem Maß den für die Batterie verfügbaren Bauraum, und damit auch die erreichbare Batteriekapazität. Um trotz stark begrenzter Batteriekapazität eine zufriedenstellende Betriebsdauer des Wearable mit einer Batterieladung zu ermöglichen, ist eine möglichst hohe Energieeffizienz der Spannungsversorgung wünschenswert.

Vor diesem Hintergrund werden als Spannungsversorgung für ein Wearable, insbesondere ein Hörinstrument, mitunter Ladungspumpen eingesetzt, die die Batteriespannung um einen Wandlungsfaktor auf eine Zwischenspannung wandeln, wobei diese Zwischenspannung dann durch einen Spannungsregler in Anpassung an einen vorgegebenen Sollwert auf die Betriebsspannung reduziert wird.

Der Erfindung liegt die Aufgabe zugrunde, eine Spannungsversorgung für ein bestimmungsgemäß am Körper eines Nutzers getragenes elektronisches Gerät, z.B. ein Hörinstrument, insbesondere in Hinblick auf die Stabilität der ausgegebenen Betriebsspannung zu verbessern.

Diese Aufgabe wird erfindungsgemäß gelöst durch die Merkmale des Anspruchs 1. Vorteilhafte und teils für sich gesehen erfinderische Ausgestaltungen und Weiterentwicklungen sind in den Unteransprüchen und der nachfolgenden Beschreibung dargelegt.

Die Spannungsversorgung umfasst eine Ladungspumpe zur Wandlung einer Batteriespannung um einen Wandlungsfaktor zu einer Zwischenspannung. Sie umfasst weiterhin einen Spannungsregler zur Reduzierung der Zwischenspannung auf eine Ausgangsspannung eines vorgegebenen Sollwerts (Betriebsspannungswerts). Um auch bei stark schwankender Batteriespannung die Ausgangsspannung stets in effizienter Weise zur Verfügung zu stellen, ist die Ladungspumpe zwischen mindestens zwei Stufen (d.h. vorgegebenen Werten) des Wandlungsfaktors umschaltbar. Der Wandlungsfaktor gibt dabei das Verhältnis des Werts der Batteriespannung zu dem Wert der Zwischenspannung wieder. Die vorgegebenen Stufen des Wandlungsfaktors sind nachfolgend auch kurz als "Wandlungsstufen" bezeichnet. Durch die Umschaltung der Ladepumpe wird ermöglicht, den durch die Spannungsregelung verursachten Spannungshub auch bei stark schwankender Batteriespannung stets vergleichsweise klein zu halten, wodurch eine hohe Effizienz der Spannungsversorgung über weite Bereiche der Batteriespannung und der Lastbedingungen erzielt wird.

Die Ladungspumpe ist insbesondere durch mehrere zwischen die Batteriespannung und Masse in Serie schaltbare Kondensatoren gebildet, die getaktet (d.h. mit einer vorgegebenen Taktzeit bzw. Taktfrequenz) aufgeladen und entladen werden. Die Umschaltung zwischen verschiedenen Werten des Wandlungsfaktors erfolgt dabei vorzugsweise durch Entfernung eines oder mehrerer Kondensatoren aus der Serienschaltung.

Zur reversiblen Umschaltung der Ladungspumpe zwischen den Wandlungsstufen umfasst die Spannungsversorgung schließlich eine auf die Ladungspumpe wirkende Steuerung. Diese Steuerung ist erfindungsgemäß dazu eingerichtet, die Ladungspumpe nach Maßgabe einer (auch als "Error-Signal" bezeichneten) Stellgröße des Spannungsreglers anzusteuern. Die eingestellte Wandlungsstufe wird von der Steuerung somit in Abhängigkeit von dem Error-Signal des Spannungsreglers bestimmt. Hierdurch wird bei gleichzeitig sehr hoher Energieeffizienz und kompaktem Aufbau der Spannungsversorgung ein hohe Stabilität der ausgegebenen Betriebsspannung erzielt.

In einer aus Kosten-Nutzen-Gründen besonders vorteilhaften Ausführung ist die Ladungspumpe zwischen genau zwei Wandlungsstufen, nämlich einer ersten Wandlungsstufe mit niedrigerem Wert des Wandlungsfaktors und einer zweiten Wandlungsstufe mit höherem Wert des Wandlungsfaktors, umschaltbar. In zweckmäßiger Gestaltung entspricht die erste Wandlungsstufe einem Wandlungsfaktor von 3:1. Die Zwischenspannung beträgt hierbei in der ersten Wandlungsstufe somit im zeitlichen Mittel ein Drittel der Batteriespannung. Die zweite Wandlungsstufe entspricht beispielsweise einem Wandlungsfaktor von 2:1. Die Zwischenspannung entspricht in der zweiten Wandlungsstufe somit im zeitlichen Mittel der Hälfte der Batteriespannung. Die erste Wandlungsstufe ist der Normalzustand, den die Ladepumpe bei hinreichend gutem Ladezustand der Batterie (und somit hoher Batteriespannung) und normalen Lastverhältnissen annimmt. Die zweite Wandlungsstufe wird unter schwierigen Betriebszuständen, insbesondere bei hoher Last und/oder niedrigem Ladezustand der Batterie aktiviert, wenn der Spannungsregler ansonsten (also bei der in der ersten Wandlungsstufe arbeitenden Ladungspumpe) nahe oder jenseits seiner Auslastungsgrenze (Regelkapazität) arbeiten würde.

Grundsätzlich kann die Erfindung aber ohne Weiteres auch auf eine Spannungsversorgung mit einer Ladepumpe angewendet werden, die zwischen mehr als zwei Wandlungsstufen schaltbar ist. Die nachfolgend unter Bezugnahme auf zwei Wandlungsstufen beschriebenen Ausgestaltungsformen der Spannungsversorgung sind dann entsprechend auf mehr als zwei Wandlungsstufen zu erweitern.

Um ein ständiges Hin- und Herschalten der Ladungspumpe zwischen der ersten und zweiten Wandlungsstufe zu vermeiden, ist die Steuerung vorzugsweise dazu eingerichtet ist, in die zweite Wandlungsstufe zu schalten, wenn die Stellgröße des Spannungsreglers einen ersten, höheren Referenzwert überschreitet, und in die erste Wandlungsstufe zurückzuschalten, wenn die Stellgröße des Spannungsreglers einen zweiten, niedrigeren Referenzwert unterschreitet. Die Steuerung ist also mit anderen Worten dazu eingerichtet, mit einer vorgegebenen Hysterese nach Maßgabe der Stellgröße des Spannungsreglers zwischen den vorgegebenen Wandlungsstufen zu wechseln.

Zusätzlich oder alternativ zu der Hysterese ist die Steuerung vorzugsweise dazu eingerichtet ist, die zweite Wandlungsstufe mindestens für eine vorgegebene Verzögerungszeit zu halten, und somit nach einem jeden Wechsel von der ersten Wandlungsstufe in die zweite Wandlungsstufe ein Rückschalten in die erste Wandlungsstufe für die Dauer der vorgegebenen Verzögerungszeit zu verhindern. Auch hiermit wird ein ständiges Hin- und Herschalten der Ladungspumpe zwischen der ersten und zweiten Wandlungsstufe, z.B. aufgrund von Über- bzw. Unterschwingern des Error-Signals nach dem Umschalten der Ladungspumpe, vermieden.

In einer weiteren vorteilhaften Ausführung der Erfindung ist die Steuerung dazu eingerichtet, einen Wechsel von der zweiten Wandlungsstufe in die erste Wandlungsstufe des Wandlungsfaktors nur dann zuzulassen, wenn die Batteriespannung einen vorgegebenen Mindestwert überschreitet. Dies ist eine (optionale) zusätzliche Sicherheitsmaßnahme, die verhindert, dass die Ladungspumpe aufgrund von Fluktuationen des Error-Signals bei schwacher Batterie in die dann ungünstigere erste Wandlungsstufe zurückschaltet.

Vorzugsweise ist der Spannungsregler als Proportionalregler oder als Proportional-Integralregler ausgebildet. Der Spannungsregler ist vorzugsweise durch eine analoge Schaltung, insbesondere mindestens einen entsprechend beschalteten Operationsverstärker, gebildet. Der Spannungsregler ist dabei derart ausgelegt, dass eine Zeitkonstante der Spannungsregelung wesentlich, insbesondere etwa um einen Faktor zwischen 10 und 100, größer als die Taktzeit der Ladungspumpe ist. Beispielsweise beträgt die Taktzeit der Ladungspumpe 10 Mikrosekunden (entsprechend einer Taktfrequenz von 100 Kilohertz), während die Zeitkonstante der Spannungsregelung beispielsweise 100 bis 1000 Mikrosekunden (entsprechend einer Bandbreite von 1 bis 10 Kilohertz) beträgt. Auf diese Weise wird vermieden, dass die Spannungsregelung auf Spannungsfluktuationen infolge der Taktung der Ladungspumpe reagiert, was ansonsten zu unerwünschten Regelungsschwingungen der Spannungsregelung führen könnte.

Der Spannungsregler ist vorzugsweise zur Einstellung der Ausgangsspannung auf den vorgegebenen Sollwert mit einem die Ausgangsspannung einstellenden, kontinuierlich steuerbaren Halbleiterschalter verschaltet und steuert diesen Halbleiterschalter mit der Stellgröße (also dem vorstehend genannten Error-Signal) an. Der Halbleiterschalter ist beispielsweise durch einen MOSFET gebildet. Die Stellgröße (also das Error-Signal) wird an diesem MOSFET als Gate-Spannung angelegt.

Eine weitere Verkörperung der Erfindung ist ein bestimmungsgemäß am Körper getragenes elektronisches Gerät (also ein Wearable). Dieses Gerät umfasst dabei erfindungsgemäß die erfindungsgemäße Spannungsversorgung, insbesondere in einer der vorstehend beschriebenen Ausgestaltungsformen der Erfindung.

Bei dem Wearable handelt es sich vorzugsweise um ein Hörinstrument wie eingangs beschrieben, insbesondere um ein zur Unterstützung des Hörvermögens eines hörgeschädigten Nutzers ausgebildetes Hörgerät. Das Hörinstrument kann dabei in einer beliebigen Bauform, insbesondere als BTE- oder ITE-Gerät, vorliegen. Grundsätzlich kann die Erfindung aber auch vorteilhaft auf andere Wearables, insbesondere auch Armbanduhren, Smart-Brillen, medizinische Geräte wie z.B. Herzschrittmacher oder Insulinpumpen, medizinische Überwachungsgeräte wie z.B. EEG-Logger, etc., angewendet werden.

Nachfolgend werden Ausführungsbeispiele der Erfindung anhand einer Zeichnung näher erläutert. Darin zeigen:
- Fig. 1: in einer schematischen Darstellung ein Hörinstrument in Form eines hinter einem Ohr eines Nutzers tragbaren Hörgeräts, mit zwei Mikrofonen, einem Hörer, einem Signalprozessor, einer Batterie und einer Spannungsversorgung,
- Fig. 2: in einem schematischen Schaltbild den Aufbau der Spannungsversorgung des Hörinstruments aus Fig. 1, mit einer in zwei Stufen zwischen verschiedenen Werten eines Wandlungsfaktors umschaltbaren Ladungspumpe, einem nachgeschalteten Spannungsregler und einer Steuerung zur Umschaltung der Ladungspumpe,
- Fig. 3: in einem schematischen Schaltbild den Aufbau der Steuerung gemäß Fig. 2,
- Fig. 4: in zwei übereinander angeordneten Darstellungen der Ladungspumpe zwei Schaltphasen der Ladungspumpe in einer ersten Wandlungsstufe, in der die Ladungspumpe mit einem Wandlungsfaktor von 3:1 betrieben wird,
- Fig. 5: in Darstellung gemäß Fig. 4 die zwei Schaltphasen der Ladungspumpe in der zweiten Wandlungsstufe, in der die Ladungspumpe mit einem Wandlungsfaktor von 2:1 betrieben wird, und
- Fig. 6: in einem schematischen Schaltbild eine zweite Ausführung der Ladepumpe und des Spannungsreglers.

Einander entsprechende Teile und Größen sind in allen Figuren stets mit gleichen Bezugszeichen versehen.

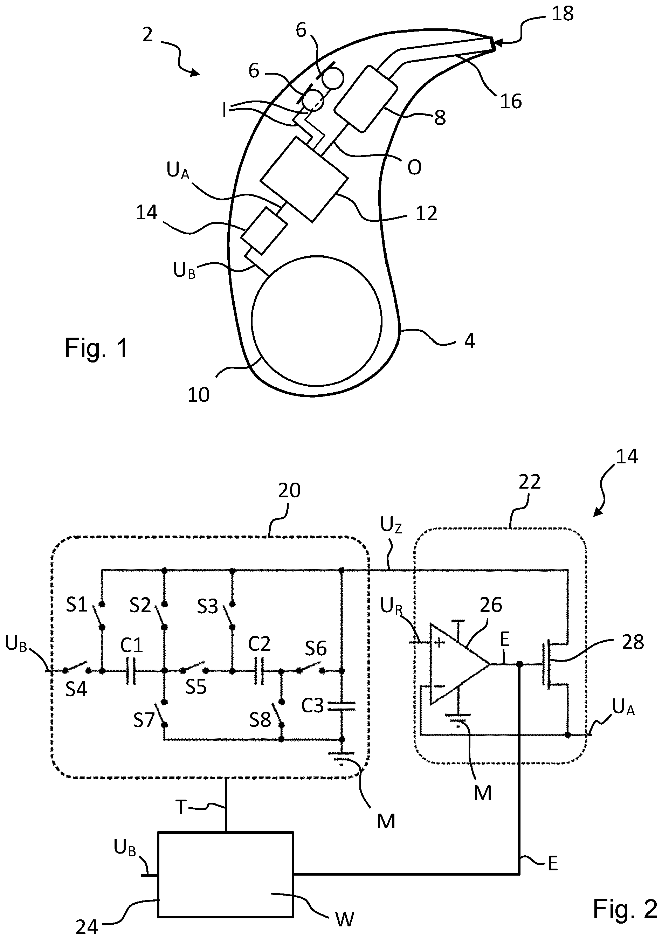

Fig. 1 zeigt ein Hörinstrument 2, das hier beispielhaft als Hörgerät, d.h. ein zur Unterstützung des Hörvermögens eines hörgeschädigten Nutzers eingerichtetes Hörinstrument, ausgebildet ist. Bei dem Hörinstrument 2 handelt es sich in dem hier dargestellten Beispiel um ein BTE-Gerät, das bestimmungsgemäß hinter einem Ohr eines Nutzers getragen wird.

Das Hörinstrument 2 umfasst innerhalb eines Gehäuses 4 mindestens ein Mikrofon 6 (im dargestellten Beispiel zwei Mikrofone 6) als Eingangswandler sowie einen Hörer 8 als Ausgangswandler. Das Hörinstrument 2 umfasst weiterhin eine Batterie 10 und einen (insbesondere digitalen) Signalprozessor 12. Vorzugsweise umfasst der Signalprozessor 12 sowohl eine programmierbare Untereinheit (zum Beispiel einen Mikroprozessor) als auch eine nicht-programmierbare Untereinheit (zum Beispiel einen ASIC).

Das Hörinstrument 2 umfasst außerdem eine Spannungsversorgung 14, die den Signalprozessor 12 (und weitere elektrische Verbraucher des Hörinstruments 2) mit einer elektrischen Ausgangsspannung U_{A} versorgt. Die Spannungsversorgung 14 wird ihrerseits aus der Batterie 10 mit einer Batteriespannung U_{B} gespeist. Im Gegensatz zu der Batteriespannung U_{B}, deren Wert in Abhängigkeit von dem Ladezustand der Batterie 10 schwankt, wird die Ausgangsspannung U_{A} von der Spannungsversorgung 14 auf einem vorgegebenen Betriebsspannungswert konstant gehalten.

Im Normalbetrieb des Hörinstruments 2 nehmen die Mikrofone 6 jeweils einen Luftschall aus der Umgebung des Hörinstruments 2 auf. Die Mikrofone 6 wandeln den Schall in ein (Eingangs-)Audiosignal I um, d.h. in ein elektrisches Signal, das eine Information über den aufgenommenen Schall enthält. Das jeweilige Eingangs-Audiosignal I wird innerhalb des Hörinstruments 2 dem Signalprozessor 12 zugeführt, der dieses Eingangs-Audiosignal I zur Unterstützung des Hörvermögens des Nutzers modifiziert, insbesondere zur Kompensation eines Hörverlusts des Nutzers frequenzselektiv verstärkt.

Der Signalprozessor 12 gibt ein Ausgangs-Audiosignal O, also wiederum ein elektrisches Signal, das in diesem Fall eine Information über den verarbeiteten und somit modifizierten Schall enthält, an den Hörer 8 aus.

Der Hörer 8 wandelt das Ausgangs-Schallsignal O in einen modifizierten Luftschall um. Dieser modifizierte Luftschall wird über einen Schallkanal 16, der den Hörer 8 mit einer Spitze 18 des Gehäuses 4 verbindet, sowie über einen (nicht explizit gezeigten) flexiblen Schallschlauch, der die Spitze 18 mit einem in den Gehörgang des Nutzers eingesetzten Ohrstück verbindet, in den Gehörgang des Nutzers übertragen.

Die in Fig. 2 näher dargestellte Spannungsversorgung 14 umfasst eine Ladungspumpe 20, eine nachgeschaltete Spannungsregelschaltung 22 sowie eine Steuerung 24.

Im Betrieb des Hörinstruments 2 wandelt die Ladungspumpe 20 die zugeführte Batteriespannung U_{B} in eine Zwischenspannung Uz um, die im zeitlichen Mittelwert um einen Wandlungsfaktor gegenüber der Batteriespannung U_{B} erniedrigt ist. Der Wandlungsfaktor gibt das Verhältnis des Werts der Batteriespannung U_{B} zu dem (zeitlich gemittelten) Wert der Zwischenspannung Uz wieder.

Zur Realisierung eines Wandlungsfaktor von 3:1, wobei der (zeitlich gemittelte) Wert der Zwischenspannung Uz einem Drittel der Batteriespannung U_{B} entspricht, umfasst die Ladungspumpe 20 drei Kondensatoren C1, C2 und C3, die durch Schalter S1 bis S8 einerseits in Serie zwischen die Batteriespannung U_{B} und Masse M und andererseits parallel zueinander zwischen die Zwischenspannung Uz und Masse M schaltbar sind. Die Schalter S1 bis S8 sind bevorzugt durch elektronisch ansteuerbare Halbleiterschalter gebildet.

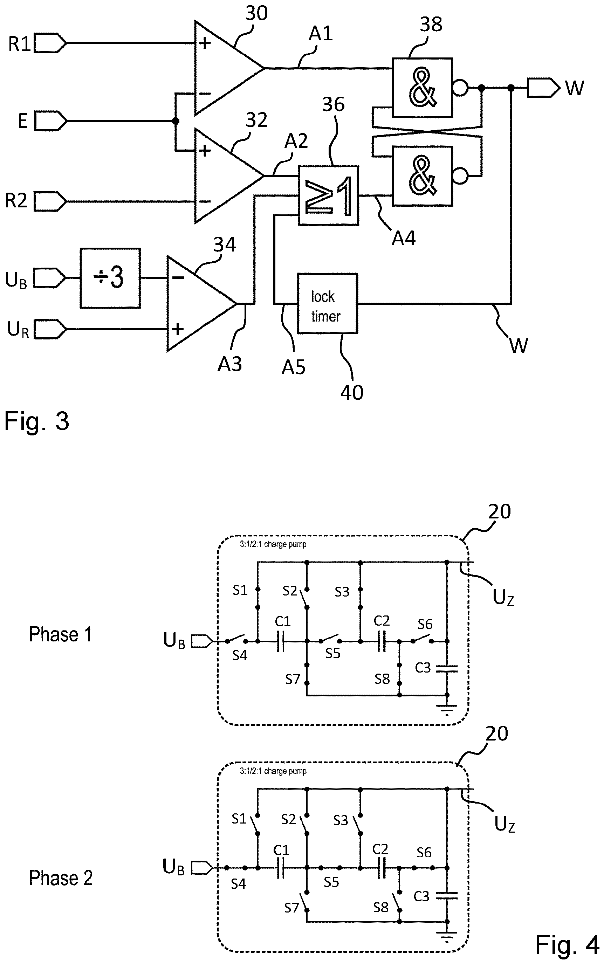

Die Kondensatoren C1 und C2 werden hierbei getaktet mit einer Taktzeit von 10 Mikrosekunden in einer ersten Schaltphase (Phase 1) entladen und in einer zweiten Schaltphase (Phase 2) geladen. Die zugehörigen Stellungen der Schalter S1 bis S8 sind für die Phase 1 im oberen Teilbild der Fig. 4 und für die Phase 2 im unteren Teilbild der Fig. 4 dargestellt. In der ersten Schaltphase ist die Ladungspumpe 20 von der Batteriespannung U_{B} durch den Schalter S4 getrennt. Die Kondensatoren C1, C2 und C3 sind durch Schließen der Schalter S1, S7 sowie S3 und S8 parallel zwischen die Zwischenspannung Uz und Masse M geschaltet. In der zweiten Schaltphase sind die Kondensatoren C1, C2 und C3 durch Schließen der Schalter S4, S5 und S6 (sowie durch Öffnen der Schalter S1, S2, S3, S7 und S8) in Serie zwischen die Batteriespannung U_{B} und Masse M geschaltet.

Die Ladungspumpe 20 ist hierbei reversibel zwischen einer ersten Wandlungsstufe mit einem Wandlungsfaktor von 3:1 und einer zweiten Wandlungsstufe mit einem Wandlungsfaktor von 2:1 umschaltbar. Die Fig. 4 zeigt, wie oben bereits angedeutet, die Stellungen der der Schalter S1 bis S8 für die erste und zweite Schaltphase der ersten Wandlungsstufe.

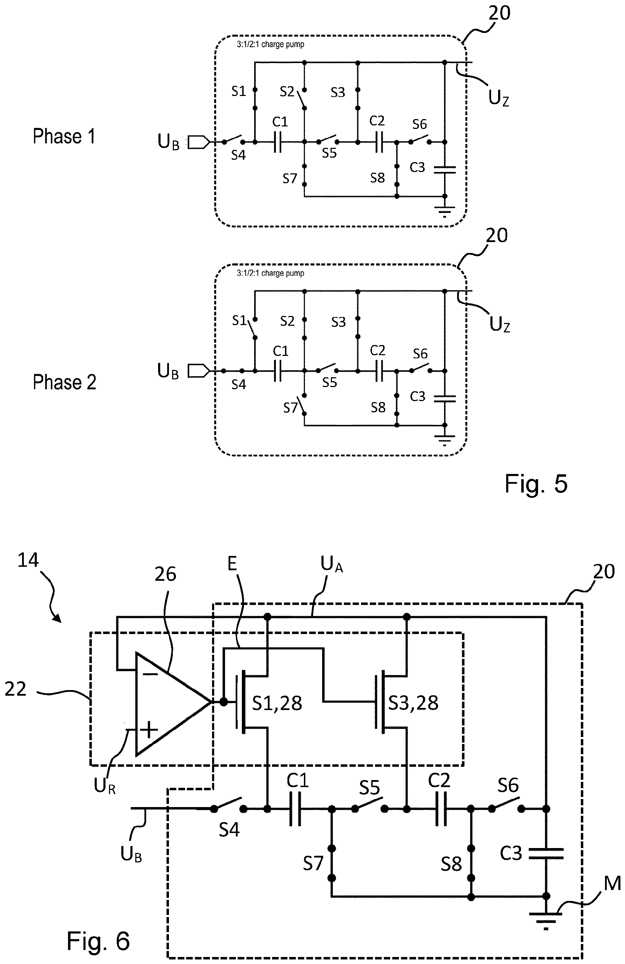

In der anhand von Fig. 5 verdeutlichten zweiten Wandlungsstufe wird der Kondensator C2 beim Laden, also in der zweiten Schaltphase, durch Öffnen der Schalter S5 und S6 sowie durch Schließen des Schalters S2 aus der Serienschaltung der Kondensatoren C1, C2 und C3 entfernt und (optional) durch Schließen der Schalter S3 und S8 parallel zu dem Kondensator C3 geschaltet (s. Phase 2 im unteren Teilbild der Fig. 5). In der zweiten Wandlungsstufe ergibt sich somit ein Wandlungsfaktor von 2:1. Hier entspricht der (zeitlich gemittelte) Wert der Zwischenspannung Uz somit der Hälfte der Batteriespannung U_{B}.

In der ersten Schaltphase der zweiten Wandlungsstufe werden die Kondensatoren C1, C3 und ggf. C2 wie in der ersten Wandlungsstufe entladen. Hinsichtlich der Stellungen der Schalter S1 bis S8 entspricht die erste Schaltphase der zweiten Wandlungsstufe (Phase 1 im oberen Teilbild der Fig. 5) somit der ersten Schaltphase der ersten Wandlungsstufe (Phase 1 im oberen Teilbild der Fig. 4).

Die Spannungsregelschaltung 22 umfasst gemäß Fig. 2 einen Spannungsregler 26 sowie einen kontinuierlich steuerbaren Halbleiterschalter, der in dem dargestellten Beispiel durch einen MOSFET 28 gebildet ist. Der Spannungsregler 26 ist im Wesentlichen durch einen Operationsverstärker oder eine Gruppe von Operationsverstärkern gebildet, wobei der Operationsverstärker bzw. die Gruppe von Operationsverstärkern durch eine entsprechende (nicht näher dargestellte) Beschaltung zu einem Proportional-Regler oder Proportional-Integral-Regler ausgestaltet sind. Die Spannungsregelschaltung 22 ist beispielsweise derart dimensioniert, dass die Spannungsregelung eine Zeitkonstante von 100 Mikrosekunden aufweist.

Dem Spannungsregler 26 sind als Ist-Größe die Ausgangsspannung U_{A} sowie als Soll-Größe eine dem einzustellenden Betriebsspannungswert entsprechende Referenzspannung U_{R} zugeführt. Basierend auf einem Vergleich der Ausgangsspannung U_{A} mit der Referenzspannung U_{R} gibt der Spannungsregler 26 als Stellgröße ein Error-Signal E aus, das dem MOSFET 28 als Gate-Spannung zugeführt wird. Der MOSFET 28 stellt unter Wirkung des Error-Signals E die Ausgangsspannung U_{A} derart ein, dass die Ausgangsspannung U_{A} an die Referenzspannung U_{R} angeglichen wird.

Das Error-Signal E und die Batteriespannung U_{B} sind weiterhin der Steuerung 24 als Eingangsgrößen zugeführt.

Die Steuerung 24 steuert einerseits die Schalter S1 bis S8 mit Steuersignalen T an, so dass wechselweise mit der vorstehend erwähnten Taktzeit die erste und zweite Schaltphase der jeweils eingestellten Wandlungsstufe, also der ersten Wandlungsstufe gemäß Fig. 4 oder der zweiten Wandlungsstufe gemäß Fig. 5, realisiert werden.

Des Weiteren erzeugt die Steuerung 24 intern ein Umschaltsignal W, nach Maßgabe von welchem die Steuerung 24 intern zwischen den beiden Wandlungsstufen der Ladungspumpe 20, mithin zwischen der Ansteuerung der Schalter S1 bis S8 zur Realisierung der Schaltphasen gemäß Fig. 4 und der Ansteuerung der Schalter S1 bis S8 zur Realisierung der Schaltphasen gemäß Fig. 5, umschaltet.

Der das Umschaltsignal W erzeugende Teil der Steuerung 24 ist in einer beispielhaften Implementierung als analoge logische elektronische Schaltung in Fig. 3 näher dargestellt. Danach umfasst die Steuerung 24 einen ersten Komparator 30 und einen zweiten Komparator 32. Den Komparatoren 30 und 32 sind drei Spannungssignale, nämlich das Error-Signal E des Spannungsreglers 26 sowie ein Referenzsignal R1 zur Vorgabe eines höheren Referenzwerts und ein Referenzsignal R2 zur Vorgabe eines niedrigeren Referenzwerts zugeführt, so dass ein Ausgangssignal A1 des ersten Komparators 30
- einen logischen "1"-Zustand ("HIGH") ausgibt, wenn und solange das Error-Signal E das Referenzsignal R1 unterschreitet und
- einen logischen "0"-Zustand ("LOW") ausgibt, wenn und solange das Error-Signal E das Referenzsignal R1 überschreitet und
   so dass ein Ausgangssignal A2 des zweiten Komparators 32
- HIGH ausgibt, wenn und solange das Error-Signal E das Referenzsignal R2 überschreitet und
- LOW ausgibt, wenn und solange das Error-Signal E das Referenzsignal R2 unterschreitet.

Die Steuerung 24 umfasst weiterhin einen dritten Komparator 34. Dem Komparator 34 sind zwei weitere Spannungssignale, nämlich die um einen Faktor 3 verminderte Batteriespannung U_{B} sowie ein weiteres Referenzsignal, vorzugsweise die Referenzspannung U_{R}, als Eingangsgrößen zugeführt, so dass ein Ausgangssignal A3 des dritten Komparators 34
- HIGH ausgibt, wenn und solange die um einen Faktor 3 verminderte Batteriespannung U_{B} das weitere Referenzsignal, vorzugsweise also die Referenzspannung U_{R} unterschreitet, und
- LOW ausgibt, wenn und solange die um einen Faktor 3 verminderte Batteriespannung U_{B} das weitere Referenzsignal, vorzugsweise also die Referenzspannung U_{R}, überschreitet.

Alternativ kann die Batteriespannung U_{B} vor der Zuführung zu dem Kondensator 34 auch um einen Faktor vermindert werden, der geringfügig von 3 verschieden ist und z.B. 3,05 beträgt. Optional kann vorgesehen sein, dass der Faktor einstellbar ist. Weiterhin kann die Batteriespannung U_{B} dem Kondensator 34 auch unvermindert zugeführt werden, wenn dafür dem Kondensator 34 auch ein entsprechend gegenüber der Referenzspannung U_{R} erhöhtes weiteres Referenzsignal zugeführt ist. Schließlich kann der Komparator 34 auch mit einer (insbesondere geringfügig ausgeprägten) Schalthysterese ausgestattet sein.

Die Steuerung 24 umfasst weiterhin ein ODER-Gatter 36, ein NAND-Flipflop 38 (also ein ungetaktetes RS-Flipflop aus zwei gekoppelten NAND-Gattern) und ein (auch als "lock timer" bezeichnetes) Verzögerungsglied 40.

Dem ODER-Gatter 36 sind die Ausgangssignale A2 und A3 des zweiten Komparators 32 und des dritten Komparators 34 als Eingangsgrößen zugeführt. Das Ausgangssignal A1 des ersten Komparators 30 sowie ein Ausgangssignal A4 des ODER-Gatters 36 sind als Set-Signal bzw. Reset-Signal dem NAND-Flipflop 38 zugeführt, das seinerseits das Umschaltsignal W ausgibt.

Das Umschaltsignal W ist dem Verzögerungsglied 40 zugeführt. Ein Ausgangssignal A5 des Verzögerungsglieds 40 ist als weitere Eingangsgröße dem ODER-Gatter 36 zugeführt. Das Verzögerungsglied 40 schaltet das Ausgangssignal A5 für einer vorgegebene Verzögerungszeit (von z.B. 500 Mikrosekunden) auf HIGH, wenn das Umschaltsignal W von LOW auf HIGH wechselt. Ansonsten bleibt das Ausgangssignal A5 des Verzögerungsglieds 40 auf LOW.

Die in Fig. 3 dargestellte und vorstehend beschriebene Schaltung hat die Funktion, dass das NAND-Flipflop 38 das Umschaltsignal W
- von LOW auf HIGH schaltet, wenn das Error-Signal E das höhere Referenzsignal R1 überschreitet, und
- von HIGH auf LOW zurückschaltet, wenn das Error-Signal E das niedrigere Referenzsignal R2 unterschreitet.

Der Wechsel des Umschaltsignals W von LOW auf HIGH triggert die Steuerung 24 zur Umschaltung der Ladungspumpe 20 von der ersten Wandlungsstufe in die zweite Wandlungsstufe. Der Wechsel des Umschaltsignals W von HIGH auf LOW triggert die Steuerung 24 zur Rückschaltung der Ladungspumpe 20 von der zweiten Wandlungsstufe in die erste Wandlungsstufe.

Durch die Komparatoren 30 und 32 und das NAND-Flipflop 38 ist somit bezüglich des Umschaltens der Ladungspumpe 20 zwischen der ersten Wandlungsstufe und der zweiten Wandlungsstufe eine (Schalt-)Hysterese gebildet. Die Schaltlogik der Schaltung aus Fig. 3 beruht auf der Erkenntnis, dass das Error-Signal E des Spannungsreglers 26 hohe Werte annimmt, wenn die Spannungsregelung aufgrund niedriger Batteriespannung U_{B} oder besonders hoher Last an oder in die Nähe ihrer Auslastungsgrenze gelangt. Dies wird als Hinweis für die Umschaltung in die - für niedrige Batteriespannung U_{B} und/oder besonders hohe Last - günstigere zweite Wandlungsstufe herangezogen.

Durch das auf das ODER-Gatter 36 geführte Ausgangssignal A3 des dritten Komparators 34 wird dabei das Rückschalten des Umschaltsignals W auf LOW verhindert, wenn und solange die um den Faktor 3 verminderte Batteriespannung U_{B} das weitere Referenzsignal, insbesondere also die Referenzspannung U_{R}, unterschreitet. Somit wird ein Rückschalten der Ladungspumpe 20 von der zweiten Wandlungsstufe in die erste Wandlungsstufe unterdrückt, wenn die Batteriespannung U_{B} einen vorgegebenen Mindestwert (nämlich das Dreifache der Referenzspannung U_{R}) unterschreitet.

Durch das zusätzlich auf das ODER-Gatter 36 geführte Ausgangssignal A5 des Verzögerungsglieds 40 wird innerhalb der vorgegebenen Verzögerungszeit nach dem Schalten des Umschaltsignals W auf HIGH das Rückschalten des Umschaltsignals W auf LOW verhindert. Somit wird erzwungen, dass die zweite Wandlungsstufe der Ladungspumpe 20 mindestens für die vorgegebene Verzögerungszeit gehalten wird. Hiermit wird berücksichtigt, dass sich beim Schalten des Umschaltsignals W auf HIGH (und dem dadurch veranlassten Umschalten der Ladungspumpe 20 in die zweite Wandlungsstufe) die Treiberstärke der Ladungspumpe 20 sprunghaft erhöht, wodurch sich wiederum der Wert des Error-Signals E sprunghaft erniedrigt. Dieser Vorgang kann zu einem "Unterschwinger" des Error-Signals E (also zu einem kurzzeitigen Absinken des Error-Signals E unter einen sich im weiteren Verlauf einstellenden neuen Plateau-Wert) führen, der ohne das Verzögerungsglied 40 unter ungünstigen Umständen ein sofortiges Zurückschalten des Umschaltsignals W auf LOW bewirken könnte. Dieser unerwünschte Effekt kann wiederholt auftreten und dann zu einer Instabilität der Spannungsregelung (Regelschwingung) führen. Dem wirkt das Verzögerungsglied 40 entgegen. Die Verzögerungszeit sollte sinnvollerweise mindestens in der Größenordnung der Zeitkonstante der Spannungsregelung liegen. Beispielsweise ist die Verzögerungszeit auf 500 Mikrosekunden gesetzt.

In einer alternativen Ausführungsvariante der Erfindung ist die Steuerung 24 durch einen Mikrocontroller realisiert, in dem die Schaltlogik der Schaltung aus Fig. 3 in Form einer lauffähig installierten Software (Firmware) implementiert ist.

Fig. 6 zeigt eine weitere Ausführungsform der Spannungsversorgung 14, bei der Bestandteile der Ladungspumpe 20 gleichzeitig als Bestandteile der Spannungsregelschaltung 22 herangezogen werden. So sind hier die Schalter S1 und S3 durch MOSFETS 28 gebildet, die zusätzlich zu der Steuerung 24 auch von dem Spannungsregler 26 angesteuert werden, um die Ausgangsspannung U_{A} auf die vorgegebene Referenzspannung U_{R} einzustellen. Die Zwischenspannung Uz äußert sich bei der Schaltung gemäß Fig. 6 nur in dem zeitlich gemittelten Spannungsabfall über den Kondensatoren C1 und C2. Anders als die vereinfachte Darstellung aus Fig. 6 suggeriert, ist das Error-Signal E nicht ständig an die MOSETS 28 angelegt, sondern nur in der (in Fig. 6 dargestellten) ersten Schaltphase, also beim Entladen der Kondensatoren C1 und ggf. C2. In der zweiten Schaltphase werden die MOSFET 28 durch die Steuerung 24 derart angesteuert, dass die Kondensatoren C1, C3 und ggf. C2 aus der Batteriespannung U_{B} geladen werden.

Fig. 6 zeigt die Ladungspumpe in der ersten Schaltphase (Phase 1) der ersten Wandlungsstufe, entsprechend dem oberen Teilbild in Fig. 4. Für die zweite Schaltphase (Phase 2) der ersten Wandlungsstufe werden die Kondensatoren C1, C2 und C3 wiederum in Serie zwischen die Batteriespannung U_{B} und Masse M geschaltet, so dass ein Wandlungsfaktor von 3:1 erzielt wird.

Bei dem gegenüber Fig. 2 modifizierten Aufbau der Ladungspumpe 20 gemäß Fig. 6 fehlt der Schalter S2. In der zweiten Wandlungsstufe wird die zweite Schaltphase (Phase 2), also das Laden der Kondensatoren C1, C2 und C3 dadurch vorgenommen, dass der Minus-Pol des Kondensators C1 über die Schalter S3 und S5 unmittelbar in Serie zu dem Kondensator C3 geschaltet wird, während der Schalter S6 geöffnet wird.

Die in dem Ausführungsbeispiel gemäß Fig. 6 ebenfalls vorhandene und nur aus Gründen der Übersichtlichkeit nicht dargestellte Steuerung 24 ist gemäß Fig. 3 aufgebaut und steuert die Schalter S1, S3 und S4 bis S8 in der vorstehend beschriebenen Weise an.

Die Erfindung wird an den vorstehend beschriebenen Ausführungsbeispielen besonders deutlich, ist auf diese Ausführungsbeispiele aber nicht beschränkt. Vielmehr können weitere Ausführungsformen der Erfindung aus den Ansprüchen und der vorstehenden Beschreibung abgeleitet werden. Insbesondere kann die beispielhaft anhand des Hörinstruments 2 erläuterte Erfindung ohne Weiteres auch auf andere Wearables, insbesondere auch Armbanduhren, Smart-Brillen, medizinische Geräte wie z.B. Herzschrittmacher oder Insulinpumpen, medizinische Überwachungsgeräte wie z.B. EEG-Logger, etc., angewendet werden.

### Bezugszeichenliste

- 2: Hörgerät
- 4: Gehäuse
- 6: Mikrofon
- 8: Hörer
- 10: Batterie
- 12: Signalprozessor
- 14: Spannungsversorgung
- 16: Schallkanal
- 18: Spitze
- 20: Ladungspumpe
- 22: Spannungsregelschaltung
- 24: Steuerung
- 26: Spannungsregler
- 28: MOSFET
- 30: Komparator
- 32: Komparator
- 34: Komparator
- 36: ODER-Gatter
- 38: NAND-Flipflop
- 40: Verzögerungsglied

- A1 - A5: Ausgangssignal
- I: Eingangs-Audiosignal
- C1 - C3: Kondensator
- E: Error-Signal
- M: Masse
- O: Ausgangs-Audiosignal
- R1, R2: Referenzsignal
- S1 - S8: Schalter
- T: Steuersignal
- U_{B}: Batteriespannung
- U_{A}: Ausgangsspannung
- U_{R}: Referenzspannung
- Uz: Zwischenspannung
- W: Umschaltsignal

## Patentansprüche

1. Spannungsversorgung (14) für ein bestimmungsgemäß am Körper eines Nutzers getragenes elektronisches Gerät, insbesondere ein Hörinstrument (2),
- mit einer Ladungspumpe (20) zur Wandlung einer Batteriespannung (U_{B}) um einen Wandlungsfaktor zu einer Zwischenspannung (Uz), wobei die Ladungspumpe (20) zwischen mindestens zwei Stufen des Wandlungsfaktors umschaltbar ist,
- mit einem Spannungsregler (26) zur Reduzierung der Zwischenspannung (Uz) auf eine Ausgangsspannung (U_{A}) eines vorgegebenen Sollwerts (U_{R}), und
- mit einer Steuerung (24) zur reversiblen Umschaltung der Ladungspumpe (20) zwischen den Stufen des Wandlungsfaktors, wobei die Steuerung (24) dazu eingerichtet ist, die Ladungspumpe (20) nach Maßgabe einer Stellgröße (E) des Spannungsreglers (26) anzusteuern.

2. Spannungsversorgung (14) nach Anspruch 1,
wobei die Ladungspumpe (20) zwischen einer ersten Stufe mit niedrigerem Wert des Wandlungsfaktors und einer zweiten Stufen mit höherem Wert des Wandlungsfaktors umschaltbar ist.

3. Spannungsversorgung (14) nach Anspruch 2,
wobei die erste Stufe einem Wandlungsfaktor von 3:1 entspricht.

4. Spannungsversorgung (14) nach Anspruch 2 oder 3,
wobei die zweite Stufe einem Wandlungsfaktor von 2:1 entspricht.

5. Spannungsversorgung (14) nach einem der Anspruch 2 bis 4,
wobei die Steuerung (24) dazu eingerichtet ist, die zweite Stufe des Wandlungsfaktors einzustellen, wenn die Stellgröße (E) des Spannungsreglers (26) einen ersten, höheren Referenzwert (R1) überschreitet, und die erste Stufe des Wandlungsfaktors einzustellen, wenn die Stellgröße (E) des Spannungsreglers (26) einen zweiten, niedrigeren Referenzwert (R2) unterschreitet.

6. Spannungsversorgung (14) nach einem der Anspruch 2 bis 5,
wobei die Steuerung (24) dazu eingerichtet ist, die zweite Stufe des Wandlungsfaktors mindestens für eine vorgegebene Verzögerungszeit zu halten.

7. Spannungsversorgung (14) nach einem der Anspruch 2 bis 6,
wobei die Steuerung (24) dazu eingerichtet ist, einen Wechsel von der zweiten Stufe des Wandlungsfaktors in die erste Stufe des Wandlungsfaktors nur dann zuzulassen, wenn die Batteriespannung (U_{B}) einen vorgegebenen Mindestwert überschreitet.

8. Spannungsversorgung (14) nach einem der Anspruch 1 bis 7,
wobei der Spannungsregler (26) als Proportionalregel oder als Proportional-Integralregler ausgebildet ist.

9. Spannungsversorgung (14) nach einem der Anspruch 1 bis 8,
wobei der Spannungsregler (26) zur Einstellung der Ausgangsspannung (U_{A}) auf den vorgegebenen Sollwert (U_{R}) mit der Stellgröße (E) einen kontinuierlich steuerbaren Halbleiterschalter, insbesondere einen MOSFET (28), ansteuert.

10. Tragbares elektronisches Gerät, insbesondere ein Hörinstrument (2), mit einer Spannungsversorgung (14) nach einem der Ansprüche 1 bis 9.
